# EUROPÄISCHE PATENTANMELDUNG

(11) **EP 3 564 060 A1**
(43) Veröffentlichungstag der Anmeldung: **06.11.2019**
(21) Anmeldenummer: 19000083.6
(22) Anmeldetag: 14.02.2019
(51) Int. Cl.: B60L 8/00, H02J 7/00, B60L 53/302, B60L 53/50, B60L 53/51, B60L 53/52, B60L 53/53, B60L 53/57

(54) **LADESTATION FÜR ELEKTRISCH ANGETRIEBENE LAND-, LUFT- UND WASSERFAHRZEUGE UND FÜR STATIONÄRE ELEKTROENERGIESPEICHER**

(30) Priorität: 02.05.2018 DE 102018003560
(71) Anmelder: Voltabox AG, 33129 Delbrück (DE)
(72) Erfinder: Mingenbach, Christoph, 49565 Bramsche (DE); Schmidt, Manfred, 31737 Rinteln (DE); Pampel, Jürgen, 32602 Vlotho (DE)
(74) Vertreter: Lelgemann, Karl-Heinz

(57) **Zusammenfassung**

Eine Ladestation (1) für elektrisch angetriebene Land-, Luft- und Wasserfahrzeuge und für stationäre Elektroenergiespeicher hat eine Ladeeinheit (3, 14), mittels der Elektroenergiespeicher der elektrisch angetriebenen Land-, Luft- und Wasserfahrzeuge und stationäre Elektroenergiespeicher aufladbar sind.

Um den Einsatzbereich einer solchen Ladestation möglichst zu erweitern und flexibel zu gestalten, wird vorgeschlagen, dass die Ladestation (1) eine Elektroenergiespeichereinheit (3) aufweist und in einem Sattelauflieger, einem Lastkraftwagen-Festaufbau, einem Lastkraftwagen-Wechselaufbau, einem Lastkraftwagen-Wechselcontainer, einem Kleintransporter, einem Lastkraftwagen-Anhänger oder einem Personenkraftwagen-Anhänger integriert ist.

## Beschreibung

Die Erfindung bezieht sich auf eine Ladestation für elektrisch angetriebene Land-, Luft- und Wasserfahrzeuge und für stationäre Elektroenergiespeicher, mit einer Ladeeinheit, mittels der Elektroenergiespeicher der elektrisch angetriebenen Land-, Luft- und Wasserfahrzeuge und stationäre Elektroenergiespeicher aufladbar sind.

Aufgrund der zunehmend weiteren Verbreitung von auf der Verwendung von Elektroenergie basierenden Antriebsvorrichtungen für Fahrzeuge aller Art sowie aufgrund des Einsatzes von Elektroenergie bei stationärem Energieverbrauch ist die Bereitstellung einer höheren Ansprüchen genügenden Schnellladeinfrastruktur von großer Bedeutung.

Ausgehend von dem eingangs geschilderten Stand der Technik liegt der Erfindung die Aufgabe zugrunde, eine Ladestation für elektrisch angetriebene Land-, Luft- und Wasserfahrzeuge und für stationäre Elektroenergiespeicher zur Verfügung zu stellen, mittels der bei vergleichsweise geringfügigen Aufwendungen in die elektrotechnische Infrastruktur flächendeckend Elektroenergiespeicher von Land-, Luft- und Wasserfahrzeugen und auch stationäre Elektroenergiespeicher mit Elektroenergie versorgt werden können.

Diese Aufgabe wird erfindungsgemäß dadurch gelöst, dass die Ladestation eine Elektroenergiespeichereinheit aufweist und in einem Sattelauflieger, einem Lastkraftwagen-Festaufbau, einem Lastkraftwagen-Wechselaufbau, einem Lastkraftwagen-Wechselcontainer, einem Kleintransporter, einem Lastkraftwagen-Anhänger oder einem Personenkraftwagen-Anhänger integriert ist.

Aufgrund der mobilen Ausgestaltung der erfindungsgemäßen Ladestation in Verbindung mit der Ausrüstung derselben mit einer geeigneten Elektroenergiespeichereinheit kann die in dieser Elektroenergiespeichereinheit gespeicherte elektrische Energie praktisch an jedem Ort, der für einen Sattelschlepper, einen Lastkraftwagen, einen Kleintransporter oder einen Personenkraftwagen erreichbar ist, zur Aufladung von Elektroenergiespeichern, bei denen es sich um stationäre Elektroenergiespeicher oder um Elektroenergiespeicher von mobilen Einheiten handeln kann, eingesetzt werden.

Um die Einsatzmöglichkeiten der mobilen Ladestation noch weiter zu erhöhen, ist es zweckmäßig, wenn diese eine z.B. als Dieselgenerator, Solar- oder Windkraftanlage ausgebildete Generatoreinheit aufweist, mittels der die Elektroenergiespeichereinheit der mobilen Ladestation aufladbar ist.

Selbstverständlich ist es möglich, die mobile Ladestation mit einem elektrischen Netzanschluss auszurüsten, so dass die Elektroenergiespeichereinheit der mobilen Ladestation an ein etwaig vorhandenes externes elektrisches Netz anschließbar ist, wobei durch den elektrischen Netzanschluss hindurch dann die Elektroenergiespeichereinheit der mobilen Ladestation unter Nutzung des vorhandenen externen elektrischen Netzes aufladbar ist.

Die Energiespeichereinheit der erfindungsgemäßen mobilen Ladestation lässt sich vorteilhaft aus Batteriezellen und einer Batteriezellensteuervorrichtung ausgestalten.

Des Weiteren ist es zweckmäßig, die Elektroenergiespeichereinheit der erfindungsgemäßen mobilen Ladestation mit einem AC/DC-Wandler auszugestalten.

Gemäß einer vorteilhaften Weiterbildung der erfindungsgemäßen Ladestation sind die Generatoreinheit und die Elektroenergiespeichereinheit derselben als Hybridanlage simultan zum Aufladen von Elektroenergiespeichern einsetzbar.

Es ist möglich, die Generatoreinheit, eine Transformatoreinheit und die Elektroenergiespeichereinheit der erfindungsgemäßen mobilen Ladestation zu einer Energieversorgungseinheit derselben zusammenzufassen.

Alternativ können die Transformatoreinheit, die Elektroenergiespeichereinheit, ein Leistungsmodul, Ladeports und eine Ladesteueranlage zu einer Ladeeinheit der mobilen Ladestation zusammengefasst werden.

Vorteilhaft weist ein Leistungsmodul der mobilen Ladestation eine Wandlungsanlage auf, mittels der durch die Transformatoreinheit und die Generatoreinheit bereitgestellte elektrische Energie auf ein zum Aufladen der Elektroenergiespeichereinheit und der Elektroenergiespeicher taugliches DC-Spannungs- und -Stromniveau wandelbar ist.

Die Wandlungsanlage des Leistungsmoduls hat zweckmäßigerweise Leistungssteller für die AC/DC- und DC/DC-Umwandlung, Sicherheitselemente, Schaltglieder, Kühlelemente, EMV-Filter und Steuereinheiten, denen mittels einer übergeordneten Steuervorrichtung der mobilen Ladestation mitteilbar ist, welches Strom- und/oder Spannungsniveau für einen Ladevorgang benötigt wird.

Zweckmäßigerweise weist bei der erfindungsgemäßen mobilen Ladestation jeder Ladeport der Ladeeinheit ein Gehäuse, ein Ladekabel, einen Ladestecker, Kühlelemente, eine Ladesteuerung, eine Mensch/Maschine-Schnittstelle (HMI) und darüber hinaus vorteilhaft einen geeichten DC-Energiezähler auf.

Die Ladeports der erfindungsgemäßen mobilen Ladestation können eine Abgabeleistung von 20 bis 1000, vorzugsweise bis 350 kW aufweisen.

Es ist möglich, dass die erfindungsgemäße Ladestation bis zu fünfzehn Ladeports aufweist, wobei mittels jedes Ladeports 320 kW DC in einem Spannungsbereich von 150 bis 920 V und einer Maximalleistung bei zumindest 800 V bereitstellbar sind, und wobei die Elektroenergiemenge je Ladeport maximal 240 kWh beträgt.

Gemäß einer weiteren vorteilhaften Weiterbildung weist die erfindungsgemäße mobile Ladestation eine Photovoltaikeinheit auf, mittels der der Eigenverbrauch der mobilen Ladestation deckbar ist und mittels der die mobile Ladestation verschaltbar ist.

Im Folgenden wird die Erfindung anhand einer Ausführungsform unter Bezugnahme auf die Zeichnung näher erläutert.

Es zeigen:
- Figur 1: eine Prinzipdarstellung einer Ausführungsform einer erfindungsgemäßen Ladestation;
- Figur 2: eine Prinzipdarstellung einer Systemarchitektur der in Figur 1 gezeigten Ausführungsform der erfindungsgemäßen Ladestation;
- Figur 3: eine Schnittansicht eines mit der in den Figuren 1 und 2 gezeigten Ausführungsform der erfindungsgemäßen Ladestation ausgerüsteten Sattelaufliegers;
- Figur 4: eine perspektivische Außenansicht des in Figur 3 gezeigten Sattelaufliegers;
- Figur 5: eine perspektivische Darstellung im Innenraum des in den Figuren 3 und 4 gezeigten Sattelaufliegers angeordneter Komponenten der in den Figuren 1 und 2 prinzipiell dargestellten Ausführungsform der erfindungsgemäßen Ladestation;
- Figur 6: eine perspektivische Darstellung eines Modulblocks einer Energiespeichereinheit der in den Figuren 1 und 2 dargestellten Ausführungsform der erfindungsgemäßen Ladestation;
- Figur 7: eine Prinzipdarstellung zweier Ladepunkte der in den Figuren 1 und 2 gezeigten Ausführungsform der erfindungsgemäßen Ladestation; und
- Figur 8: eine Prinzipdarstellung von Nachladungsaggregaten zur Aufladung der Elektroenergiespeichereinheit der in den Figuren 1 und 2 gezeigten Ausführungsform der erfindungsgemäßen Ladestation.

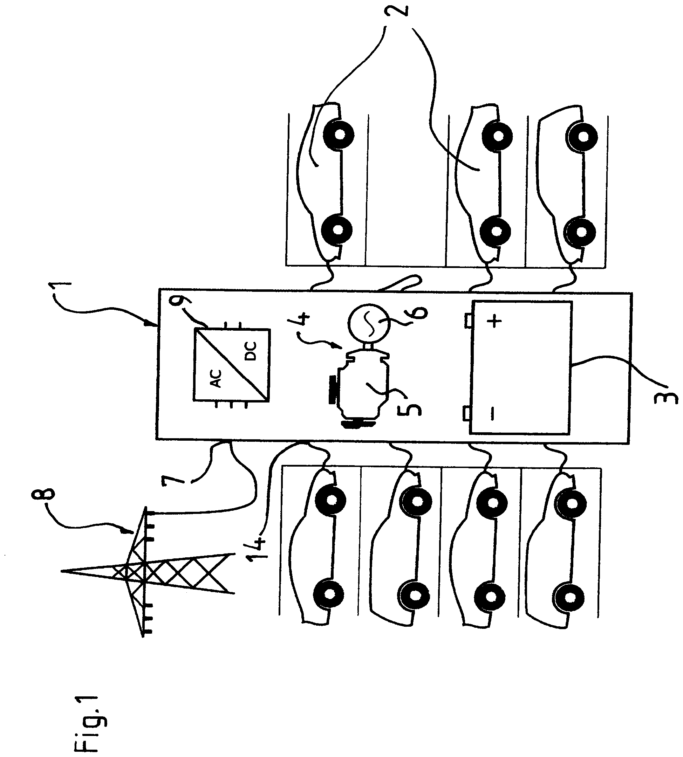

Eine im Folgenden in den Figuren 1 bis 8 näher erläuterte Ladestation 1 für elektrisch angetriebene Land-, Luft- und Wasserfahrzeuge und für stationäre Elektroenergiespeicher dient im Falle des in Figur 1 prinzipiell dargestellten Einsatzfalls dazu, diverse Landfahrzeuge 2 bzw. deren in Figur 1 nicht gezeigte Elektroenergiespeicher mit elektrischer Energie aufzuladen.

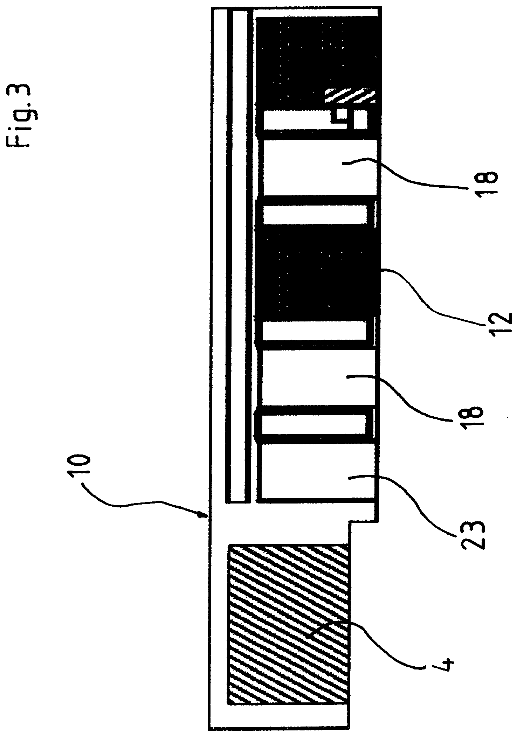

Im dargestellten Ausführungsbeispiel ist die Ladestation 1, wie dies im Weiteren noch anhand der Figuren 3 bis 5 erläutert werden wird, als Sattelauflieger 10 ausgestaltet. Infolgedessen ist die in Figur 1 gezeigte Ladestation 1 an beliebigen Orten zur Aufladung nicht zur Ladestation 1 gehöriger Elektroenergiespeicher einsetzbar.

Zur Ladestation 1 gehört eine Elektroenergiespeichereinheit 3, die in dem im Folgenden beschriebenen Ausführungsbeispiel als modular aufgebauter Batteriespeicher ausgebildet ist.

Der in der Ladestation 1 angeordnete Batteriespeicher 3 ist mittels einer Generatoreinheit 4, zu der im in Figur 1 dargestellten Ausführungsbeispiel ein Dieselmotor 5 und eine Generatorstufe 6 gehören, mit elektrischer Energie versorg- bzw. aufladbar.

Darüber hinaus hat die mobile Ladestation 1 einen Netzanschluss 7, mittels dem der Batteriespeicher 3 der Ladestation 1 aus einem in Figur 1 mittels eines Stromträgers dargestellten elektrischen Netzes 8 mit elektrischer Energie versorg- bzw. aufladbar ist.

Um die Elektroenergiespeichereinheit bzw. den Batteriespeicher 3 der Ladestation 1 über den Netzanschluss 7 bzw. mittels der Generatoreinheit 4 mit elektrischer Energie versorgen zu können, ist die Ladestation 1 mit einer AC/DC-Wandlungsanlage versehen, mittels der über den Netzanschluss 7 zur Ladestation 1 geführter bzw. in der Generatoreinheit 4 erzeugter Wechselstrom in dem Batteriespeicher 3 zuführbaren Gleichstrom umwandelbar ist.

An dieser Stelle sei darauf hingewiesen, dass anstelle oder zusätzlich zu der den Dieselmotor 5 und die Generatorstufe 6 aufweisenden Generatoreinheit 4 der Ladestation 1 eine auf dem Prinzip einer Solaranlage oder einer Windkraftanlage basierende Generatoreinheit vorgesehen sein kann.

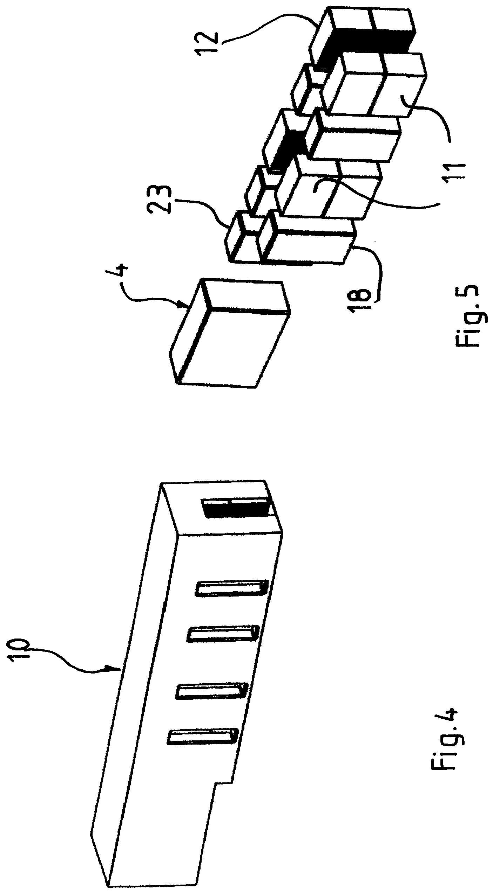

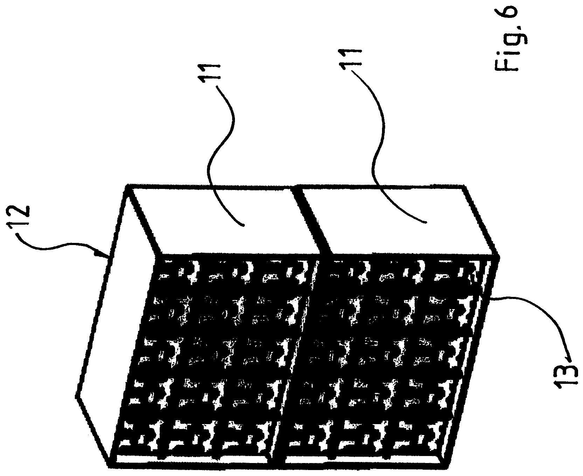

Der Batteriespeicher 3 der in Figur 1 gezeigten in Form eines Aufliegers 10 ausgebildeten und damit mobilen Ladestation 1 kann ca. elektrische Energie in Höhe von 1,2 MWh speichern. Wie sich insbesondere aus den Figuren 3 und 6 ergibt, ist der Batteriespeicher 3 aus einer Mehrzahl gleichartiger Batteriespeichermodule 11 zusammengesetzt, wobei, wie dies insbesondere aus Figur 6 hervorgeht, zwei Batteriespeichermodule 11 übereinander angeordnet und zu einem Batteriespeichermodulblock 12 zusammengestellt sind. Wie eine Zusammenschau der Figuren 4 und 5 zeigt, hat die als Ausführungsbeispiel beschriebene mobile Ladestation 1 vier Batteriespeichermodulblöcke 12 mit jeweils zwei Batteriespeichermodulen 11. Die Batteriespeichermodule 11 sind jeweils aus einer Vielzahl von Batteriezellenanordnungen 13 zusammengesetzt, wobei die Batteriezellenanordnungen 13 jeweils in den Figuren nicht explizit dargestellte Batteriezellensteuervorrichtungen aufweisen.

Zu der mobilen Ladestation 1 gehören im dargestellten Ausführungsbeispiel acht Ladeanschlüsse 14, durch die hindurch in Bezug auf die mobile Ladestation 1 externe Elektroenergiespeicher, im Falle des in Figur 1 gezeigten Einsatzfalls Elektroenergiespeicher von Landfahrzeugen 2, mit elektrischer Energie aufladbar sind. Jeder der Ladeanschlüsse 14 ist mit einer Ladeleistung bzw. -kapazität von 180 kW betreibbar.

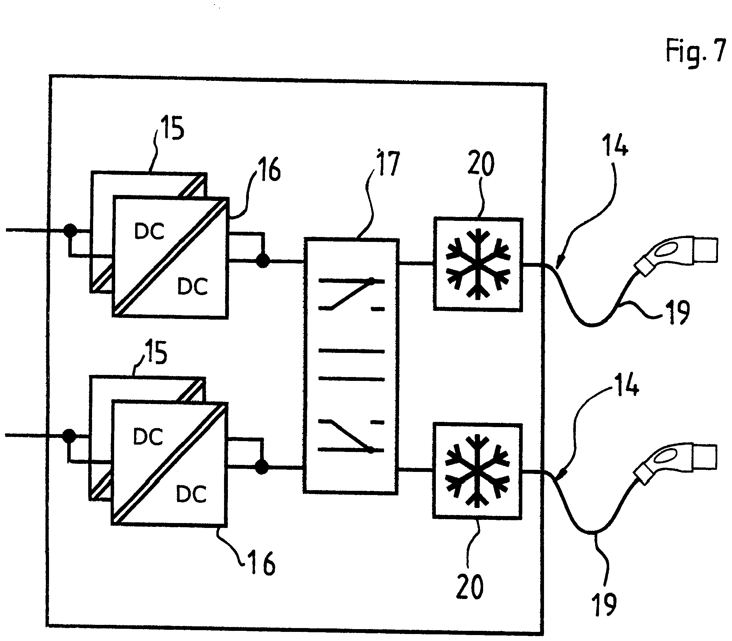

Wie sich insbesondere aus Figur 7, die zwei Ladeanschlüsse 14 zeigt, ergibt, gehören zu jedem Ladeanschluss 14 zwei Leistungsblöcke 15, 16, die jeweils eine Leistung von 90 kW aufweisen. Jeweils zwei Ladeanschlüssen 14 ist ein Umschaltglied 17 zugeordnet, mittels denen die den beiden Ladeanschlüssen 14 zugeordneten Leistungsblöcke 15, 16 zusammenschaltbar sind. Die so zusammengeschaltete Leistung kann dann an einem beliebigen der beiden Ladeanschlüsse 14 zur Verfügung gestellt werden. An diesem Ladeanschluss 14 steht dann eine Ladeleistung von 350 kW zur Verfügung.

Wie sich aus einer Zusammenschau der Figuren 1, 3, 5 und 7 ergibt, sind im dargestellten Ausführungsbeispiel der Ladestation 1 jeweils zwei Ladeanschlüsse 14 einem Schaltschrank 18 zugeordnet. Ladekabel 19 der Ladeanschlüsse 14 sind jeweils mit einem Kühlaggregat 20 versehen. Somit kann, wie bereits erwähnt, an beiden Ladeanschlüssen 14 bei entsprechender Stellung des Umschaltglieds 17 eine Ladeleistung von 350 kW zur Verfügung gestellt werden.

Im dargestellten Ausführungsbeispiel der mobilen Ladestation 1 sind jeweils die einem Schaltschrank 18 zugeordneten Ladepunkte bzw. Ladeanschlüsse 14 miteinander koppelbar, so dass die mobile Ladestation 1, wie sie in den Figuren als Ausführungsbeispiel dargestellt ist, vier Ladepunkte bzw. Ladeanschlüsse 14 mit einer Ladeleistung bzw. -kapazität von jeweils 350 kW realisieren kann.

Die Leistungshalbleiter sind in Siliciumcarbid (SiC) ausgeführt. Die Schaltfrequenzen liegen oberhalb von 16 kHz und sind somit nicht hörbar. Der Wirkungsgrad ist mit ca. 97 % vergleichsweise hoch. Aufgrund der geringen Wärmeerzeugung kann die Kühlung extrem geräuscharm ausgebildet werden.

Die DC-Eingangsspannung des die beiden in Figur 7 dargestellten Ladepunkte bzw. Ladeanschlüsse 14 aufweisenden Ladeblocks beträgt 450 bis 750 V. Mittels des Ladeblocks können zwei Ausgangsspannungsbereiche, nämlich von 150 bis 480 V und von 300 bis 960 V, mit automatischer Umschaltung zur Verfügung gestellt werden. Der entsprechend vorgesehene Schaltschrank 18, der dem in Figur 7 dargestellten Ladeblock zugeordnet ist, hätte dann ein Gewicht von ca. 550 kg und Abmessungen von ca. 1200 x 800 x 2000 mm.

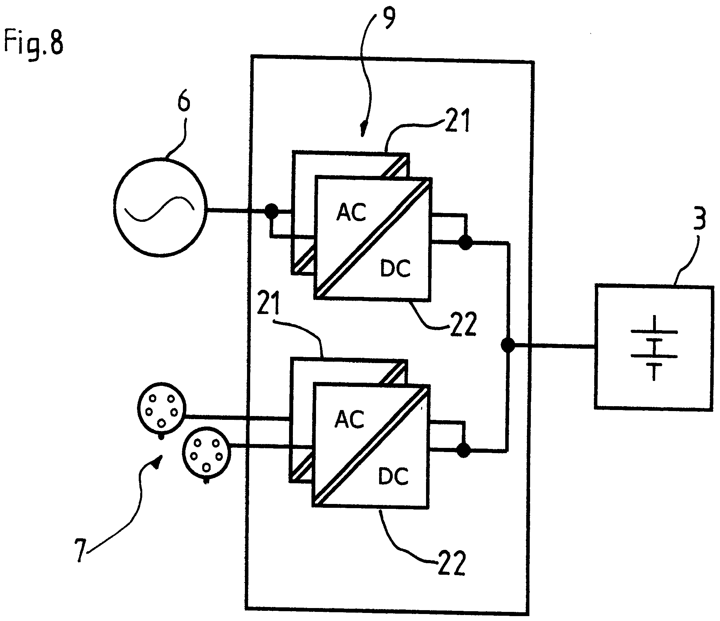

Wie sich am besten aus einer Zusammenschau der Figuren 1 und 8 ergibt, ist die Generatorstufe 6 der Generatoreinheit 4 und der Netzanschluss 7 der mobilen Ladestation 1 über AC/DC-Leistungsblöcke 21, 22 mit dem Batteriespeicher 3 verbunden. Die zur Ausgestaltung der AC/DC-Leistungsblöcke 21, 22 verwendeten Bauteile sind - soweit möglich - identisch mit denjenigen entsprechenden Bauteilen, die für die den Ladeanschlüssen 14 zugeordneten Leistungsblöcke 15, 16 eingesetzt werden. Entsprechend kann die Wartung der und die Ersatzteilhaltung für die Ladestation 1 vereinfacht werden.

Da auch für die der Nachladung des Batteriespeichers 3 der Ladestation 1 dienenden Bauteile solche in SiC-Technologie verwendet werden, ergibt sich auch insoweit ein leichter und kompakter Aufbau, eine hohe Effizienz der Bauteile sowie ein geräuscharmer Betrieb derselben. Sofern einer der AC/DC-Leistungsblöcke ausfällt, stehen weiterhin 270 kW Nachladeleistung für den Batteriespeicher 3 der Ladestation 1 zur Verfügung, da jeder der der Nachladung dienenden AC/DC-Leistungsblöcke 21, 22 eine Ladeleistung von 90 kW realisiert.

Die in Figur 8 dargestellten, der Nachladung des Batteriespeichers 3 dienenden Bauteile sind in dem in den Figuren 3 und 5 dargestellten, der Generatoreinheit 4 zugeordneten Schaltschrank 23 zusammengefasst.

Die Netzspannung beträgt 400/480 V ± 10 % bei 50/60 Hz. Infolge einer aktiven Netzgleichrichtung (cos ϕ >99 %) ergibt sich ein hoher Leistungsfaktor.

Innerhalb des in den Figuren 3 und 4 gezeigten Sattelaufliegers 10 ist die Ladestation 1 in der anhand der Figuren erläuterten Ausführungsform aufgenommen. Hierbei befindet sich die Generatoreinheit 4 in dem eine im Vergleich zum übrigen Sattelauflieger 10 eine geringere vertikale Erstreckung aufweisenden Aufliegebereich des Sattelaufliegers 10. Zwischen der Generatoreinheit 4 und den vier den Ladepunkten bzw. Ladeanschlüssen 14 zugeordneten Schaltschränken 18 und Batteriemodulblöcken 12 ist der der Generatoreinheit 4 und dem Netzanschluss 7 angeordnete Schaltschrank 23 angeordnet.

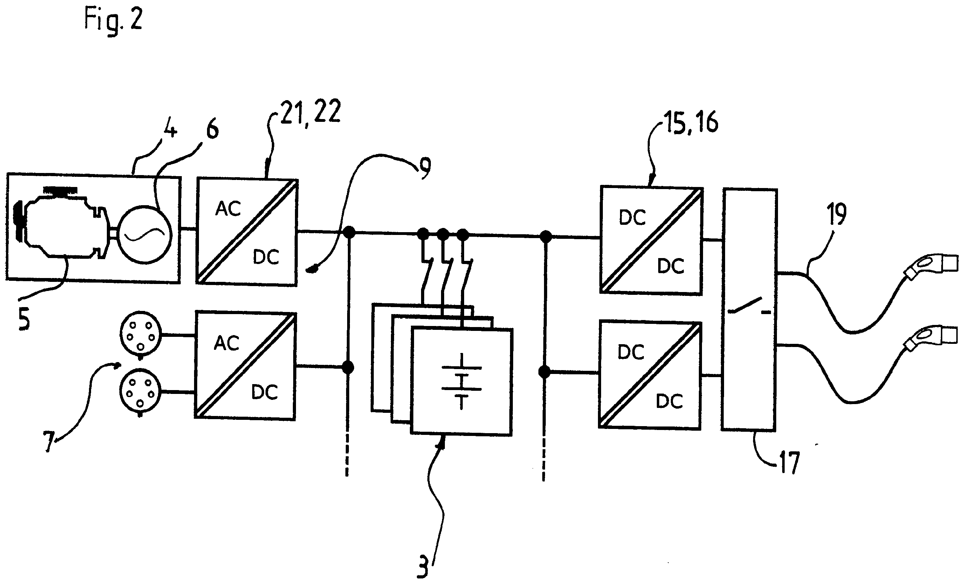

Der Batteriespeicher 3 ist als zusammenhängender Batteriespeicher aus einzelnen abschaltbaren Strängen ausgebildet, wie dies am besten in Figur 2 gezeigt ist. Eine Aufladung externer Energiespeicher ist zu jeder Zeit an jedem Ladeanschluss 14 der Ladestation 1 möglich. Verluste aufgrund von Energieumverteilung zwischen Ladepunkten bzw. Ladeanschlüssen 14 treten nicht auf. Die in der Ladestation 1 installierte Batteriespeicherkapazität ist skalierbar, da alle Ladepunkte bzw. Ladeanschlüsse 14 auf den gemeinsamen Batteriespeicher zurückgreifen.

Der Netzanschluss 7 und die Generatoreinheit 4 können parallel betrieben werden, wobei selbstverständlich die hierdurch ggf. zur Verfügung gestellte elektrische Energie sowohl zum Aufladen des Batteriespeichers 3 als auch zum Laden von über Ladepunkte bzw. Ladeanschlüsse 14 an die Ladestation 1 angeschlossenen externen Elektroenergiespeichern verwendet werden kann.

## Patentansprüche

1. Ladestation für elektrisch angetriebene Land- (2), Luft- und Wasserfahrzeuge und für stationäre Elektroenergiespeicher, mit einer Ladeeinheit, mittels der Elektroenergiespeicher der elektrisch angetriebenen Land- (2), Luft- und Wasserfahrzeuge und stationäre Elektroenergiespeicher aufladbar sind, **dadurch gekennzeichnet, dass** die Ladestation eine Elektroenergiespeichereinheit (3) aufweist und in einem Sattelauflieger (10), einem Lastkraftwagen-Festaufbau, einem Lastkraftwagen-Wechselaufbau, einem Lastkraftwagen-Wechselcontainer, einem Kleintransporter, einem Lastkraftwagen-Anhänger oder einem Personenkraftwagen-Anhänger integriert ist.

2. Ladestation nach Anspruch 1 die eine z.B. als Dieselgenerator, Solar- oder Windkraftanlage ausgebildete Generatoreinheit (4) aufweist, mittels der die Elektroenergiespeichereinheit (3) der mobilen Ladestation (1) aufladbar ist.

3. Ladestation nach Anspruch 1 oder 2, die einen elektrischen Netzanschluss (7) an ein externes elektrisches Netz (8) aufweist, durch den hindurch die Elektroenergiespeichereinheit (3) der mobilen Ladestation (1) aufladbar ist.

4. Ladestation nach einem der Ansprüche 1 bis 3, deren Elektroenergiespeichereinheit (3) Batteriezellen und eine Batteriezellensteuervorrichtung aufweist.

5. Ladestation nach einem der Ansprüche 1 bis 4, deren Elektroenergiespeichereinheit (3) einen AC/DC-Wandler (9) aufweist.

6. Ladestation nach einem der Ansprüche 2 bis 5, bei der die Generatoreinheit (4) und die Elektroenergiespeichereinheit (3) als Hybridanlage simultan zum Aufladen von Elektroenergiespeichern einsetzbar sind.

7. Ladestation nach einem der Ansprüche 2 bis 6, bei der die Generatoreinheit (4), eine Transformatoreinheit und die Elektroenergiespeichereinheit (3) zu einer Energieversorgungseinheit der mobilen Ladestation (1) zusammengefasst sind.

8. Ladestation nach einem der Ansprüche 1 bis 6, bei der eine Transformatoreinheit, die Elektroenergiespeichereinheit (3), ein Leistungsmodul (15, 16), Ladeports (14) und eine Ladesteueranlage zu einer Ladeeinheit der mobilen Ladestation (1) zusammengefasst sind.

9. Ladestation nach Anspruch 8, deren Leistungsmodul (15, 16; 21, 22) eine Wandlungsanlage aufweist, mittels der durch die Transformatoreinheit und die Generatoreinheit (4) bereitgestellte elektrische Energie auf ein zum Aufladen der Elektroenergiespeichereinheit (3) und der Elektroenergiespeicher taugliches DC-Spannungs- und - Stromniveau wandelbar ist.

10. Ladestation nach Anspruch 9, bei der die Wandlungsanlage des Leistungsmoduls Leistungssteller für die AC/DC- und DC/DC-Umwandlung, Sicherheitselemente, Schaltglieder, Kühlelemente, EMV-Filter und Steuereinheiten aufweist, denen mittels einer übergeordneten Steuervorrichtung der mobilen Ladestation mitteilbar ist, welches Strom- und/oder Spannungsniveau für einen Ladevorgang benötigt wird.

11. Ladestation nach einem der Ansprüche 8 bis 10, bei der jeder Ladeport (14) der Ladeeinheit ein Gehäuse, ein Ladekabel, einen Ladestecker, Kühlelemente (20), eine Ladesteuerung, eine Mensch/Maschinen-Schnittstelle (HMI) und vorteilhaft einen geeichten DC-Energiezähler aufweist.

12. Ladestation nach einem der Ansprüche 8 bis 11, die Ladeports (14) mit einer Abgabeleistung von 20 bis 1000, vorzugsweise bis 350 kW aufweist.

13. Ladestation nach einem der Ansprüche 8 bis 12, die bis zu 15 Ladeports aufweist, wobei mittels jedes Ladeports 320 kW DC in einem Spannungsbereich von 150 bis 920 V und einer Maximalleistung bei zumindest 800 V bereitstellbar sind, und wobei die Elektroenergiemenge je Ladeport maximal 240 kWh beträgt.

14. Ladestation nach einem der Ansprüche 1 bis 13, die eine Photovoltaikeinheit aufweist, mittels der der Eigenverbrauch der mobilen Ladestation deckbar ist und mittels der die mobile Ladestation verschaltbar ist.
